# EUROPÄISCHE PATENTSCHRIFT

(11) **EP 3 583 265 B1**
(45) Veröffentlichungstag und Bekanntmachung des Hinweises auf die Patenterteilung: **28.04.2021**
(21) Anmeldenummer: 18709471.9
(22) Anmeldetag: 30.01.2018
(51) Int. Cl.: E01B 27/16

(54) **STOPFAGGREGAT ZUM UNTERSTOPFEN VON SCHWELLEN EINES GLEISES**
TAMPING ASSEMBLY FOR TAMPING SLEEPERS OF A TRACK
GROUPE DE BOURRAGE SERVANT À RÉALISER UN BOURRAGE SOUS LES TRAVERSES D'UNE VOIE FERRÉE

(30) Priorität: 17.02.2017 AT 602017
(43) Veröffentlichungstag der Anmeldung: 25.12.2019
(73) Patentinhaber: Plasser & Theurer Export von Bahnbaumaschinen GmbH, 1010 Wien (AT)
(72) Erfinder: WÖRGÖTTER, Herbert, 4209 Engerwitzdorf (AT); MATZINGER, Nikolaus, 4181 Oberneukirchen (AT)
(86) Internationale Anmeldenummer: PCT/EP2018/052190
(87) Internationale Veröffentlichungsnummer: WO 2018/149628

(56) Entgegenhaltungen:
- WO-A1-2016/058667
- AT-B- 350 097
- AT-B- 366 434
- DE-B- 1 235 970

## Beschreibung

### Gebiet der Technik

Die Erfindung betrifft ein Stopfaggregat zum Unterstopfen von Schwellen eines Gleises, umfassend eine Stopfeinheit mit gegenüberliegenden, auf einem Werkzeugträger gelagerten Stopfwerkzeugen, welche jeweils mit einem Beistellantrieb zur Erzeugung einer Beistellbewegung verbunden sind, wobei ein Exzenterantrieb zur Erzeugung einer Vibrationsbewegung vorgesehen ist. Zudem betrifft die Erfindung ein Verfahren zum Unterstopfen von Schwellen eines Gleises mittels eines Stopfaggregats.

### Stand der Technik

Für eine Instandhaltung eines Gleises oder nach einer Gleiserneuerung besteht gewöhnlich die Notwendigkeit, eine Schotterbettung zu verdichten. Neben Handstopfern kennt man zu diesem Zweck Stopfaggregate, die an Gleisbaumaschinen angeordnet sind. Während einer Gleisunterstopfung bewegt sich die Gleisbaumaschine entlang des Gleises, wobei am Stopfaggregat befestigte Stopfpickel in Schwellenfächer abgesenkt und beigestellt werden.

Dabei ist ein Stopfaggregat äußerst hohen Belastungen ausgesetzt. Besonders beim Eintauchvorgang in die Schotterbettung und beim anschließenden Verdichten des Schotters unterhalb einer Schwelle treten ständig hohe Lastwechsel auf, die den Vibrationsantrieb stark beanspruchen. Auch zwischen den Stopfvorgängen, wird das Stopfaggregat durch den ständig in Betrieb befindlichen Vibrationsantrieb und die auf die Stopfwerkzeuge übertragene Vibration erheblich belastet.

Stopfaggregate zum Unterstopfen von Schwellen eines Gleises sind bereits vielfach bekannt, wie z. B. durch AT 350 097 B. Als Vibrationserreger dient eine rotierbare Exzenterwelle, an der die Beistellantriebe zur Übertragung der Schwingungen auf die Stopfpickel angelenkt sind. Bei dieser Bauart ist die Schwingungsamplitude an den Stopfwerkzeugen fix vorgegeben AT 366 434 B zeigt ein gattungsgemäßes Stopfaggregat sowie Verfahren zum Unterstopfen von Schwellen eines Gleises.

### Zusammenfassung der Erfindung

Der Erfindung liegt die Aufgabe zugrunde, für ein Stopfaggregat der eingangs genannten Art eine Verbesserung gegenüber dem Stand der Technik anzugeben. Eine weitere Aufgabe besteht darin, ein Verfahren zum Unterstopfen von Schwellen eines Gleises mittels eines verbesserten Stopfaggregats darzulegen.

Erfindungsgemäß wird diese Aufgabe gelöst durch ein Stopfaggregat gemäß Anspruch 1 und ein Verfahren gemäß Anspruch 10. Abhängige Ansprüche geben vorteilhafte Ausgestaltungen der Erfindung an.

Die Erfindung sieht vor, dass der Exzenterantrieb in einem abgedichteten Gehäuse mit einer Ölbadschmierung angeordnet ist und dass aus dem Gehäuse zumindest ein Vibrationsübertragungselement ragt, das mit einem Beistellantrieb oder beiden Beistellantrieben verbunden ist. Dadurch verbessert sich die Schmierung des Exzenterantriebes samt Exzenterwelle. Zudem erlaubt die erfindungsgemäße Anordnung einen Tausch der Beistellantriebe ohne ein Öffnen des Gehäuses. Bei Verschleißerscheinungen kann deshalb das Stopfaggregat rasch wieder instand gesetzt werden.

In einer vorteilhaften Ausprägung der Erfindung ist vorgesehen, dass das Gehäuse mit dem zumindest einem Vibrationsübertragungselement als mit lösbaren Verbindungselementen montiertes Modul ausgebildet ist. Durch diesen modularen Aufbau ist ein unkomplizierter Tausch des Exzenterantriebs möglich. Das Gehäuse samt Exzenterwelle und Vibrationsübertragungselement ist als Ersatzteil (Baugruppe) einsetzbar und es ist eine einfache Wartung bzw. Reparaturmöglichkeit vor Ort auf der Baustelle gegeben. Außerdem besteht die Möglichkeit bereits bestehende Stopfaggregate mit der Baugruppe kostengünstig nachzurüsten. Des Weiteren sind durch Kombination verschiedener Modulkomponenten unterschiedliche Stopfaggregate für diverse Anforderungen zusammenstellbar.

Eine weitere Verbesserung der erfindungsgemäßen Vorrichtung sieht vor, dass das Stopfaggregat mehrere baugleiche Stopfeinheiten zum gleichzeitigen Unterstopfen mehrerer Schwellen umfasst. Durch diese flexible Gestaltung und variable Kombination an Stopfeinheiten werden die Stopfaggregate perfekt an die Gegebenheiten im Arbeitseinsatz und die Kundenwünsche angepasst. Außerdem ist durch eine Modulbauweise eine enorme Kostenreduzierung gegeben.

In einer ersten vorteilhaften Variante der Erfindung ist ein erstes Vibrationsübertragungselement mit dem einen Beistellantrieb verbunden und ein zweites Vibrationsübertragungselement ist mit dem anderen Beistellantrieb verbunden. Dadurch können bei Bedarf mit den Beistellantrieben unterschiedliche Vibrationsamplituden übertragen werden.

Dabei ist es sinnvoll, wenn das Gehäuse oberhalb der Beistellantriebe angeordnet ist. Bei dieser Anordnung besteht die Möglichkeit, durch eine vertikale Verschiebung des Gehäuses samt Exzenterwelle eine Schwingungsamplitude an einem unteren Ende der Stopfwerkzeuge zu variieren.

Eine andere vorteilhafte Variante der Erfindung sieht vor, dass ein vertikal ausgerichtetes Vibrationsübertragungselement mit beiden Beistellantrieben verbunden ist. Dadurch werden die bewegten Massen am Stopfaggregat reduziert und somit eine Lärmreduktion erreicht. Zudem ist nur eine abgedichtete Gehäusedurchführung für das eine Vibrationsübertragungselement vorzusehen.

Dabei ist es von Vorteil, wenn das Gehäuse unterhalb der Beistellantriebe angeordnet ist. Dadurch ergibt sich eine sehr geringe Bauhöhe der Stopfeinheit für eine kompakte Bauweise des Stopfaggregats. Zudem sind die Gehäusedurchführung für das Vibrationsübertragungselement oben angeordnet und die unteren Gehäusehälfte abgeschlossen. Die untere Gehäusehälfte bildet somit eine dichte Ölwanne, wodurch Leckagen der Ölschmierung vermieden werden.

Eine vorteilhafte Weiterbildung der Erfindung ist gegeben, wenn das Vibrationsübertragungselement mittels eines Verstellantriebs in seiner Länge verstellbar ausgeführt ist. Dadurch ändert sich die kinematische Anordnung des Exzenterantriebs und der Beistellantriebe. Die vom Exzenterantrieb erzeugte Vibrationsamplitude bewirkt dann eine veränderte Schwingungsamplitude an den unteren Enden der Stopfwerkzeuge. Auf diese Weise ist die im Schotterbett wirksame Schwingungsamplitude an eine erforderliche Arbeitssituation präzise angepasst.

Eine weitere vorteilhafte Ausbildung sieht vor, dass das Gehäuse gegenüber dem Werkzeugträger mittels eines Verstellantriebs vertikal verschiebbar ausgebildet ist. Dadurch wird auf konstruktiv einfache Weise eine Verstellmöglichkeit der Schwingungsamplitude an den unteren Enden der Stopfwerkzeuge geschaffen.

Das erfindungsgemäße Verfahren sieht vor, dass eine Verbindungsstelle des jeweiligen Beistellantriebs mit dem zugeordneten Vibrationsübertragungselement in vertikaler Richtung verschoben wird, um eine Schwingungsamplitude an einem unteren Ende der Stopfwerkzeuge zu variieren. Dadurch wird die Schwingungsamplitude der Stopfwerkzeuge in einer nicht abgesenkten Position kleiner und bei einem Eintauchvorgang größer eingestellt. Dies führt zu einer Energieeinsparung und Lärmreduktion während der Stopfvorgänge.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Stopfeinheit mit zwei Vibrationsübertragungselementen
- Fig. 2: Kinematik Stopfeinheit
- Fig. 3: Schnittbild Exzenterantrieb
- Fig. 4: Stopfeinheit mit gemeinsamen Vibrationsübertragungselement
- Fig. 5: Detailansicht Exzenterantrieb
- Fig. 6: Explosionsansicht Exzenterantrieb
- Fig. 7: Stopfaggregat in Modulbauweise

### Beschreibung der Ausführungsformen

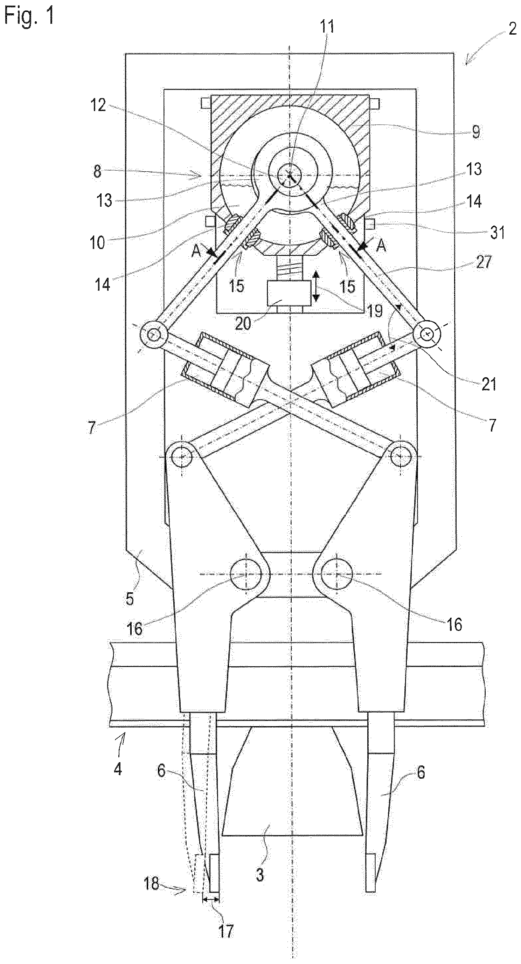

Die in Fig. 1 dargestellte Stopfeinheit 2 zum Unterstopfen von Schwellen 3 eines Gleises 4 ist Teil eines Stopfaggregats 1 und umfasst zwei gegenüberliegende, auf einem Werkzeugträger 5 gelagerte, Stopfwerkzeuge 6, welche jeweils mit einem Beistellantrieb 7 verbunden sind. Oberhalb der Beistellantriebe 7 ist ein Exzenterantrieb 8 in einem abgedichteten Gehäuse 9 mit einer Ölbadschmierung 10 angeordnet. Um eine Exzenterachse 11 dreht sich eine Exzenterwelle 12, auf der pleuelartig zwei Vibrationsübertragungselemente 13 gelagert sind.

Die Vibrationsübertragungselemente 13 ragen unten aus dem Gehäuse 9 heraus, wobei eine Längsachse des jeweiligen Vibrationsübertragungselement 13 mit einer Vertikalen einen Winkel von ca. 40 Grad einschließt. Mit dieser kinematischen Anordnung bewirkt eine vertikale Verschiebung des Gehäuses 9 eine maximale Veränderung einer Schwingungsamplitude 17 an einem unteren Ende 18 der Stopfwerkzeuge 6.

Ein Ende des jeweiligen Vibrationsübertragungselements 13 ist gelenkig mit einem Beistellantrieb 7 verbunden. Über eine sphärische Abdichtung 14 wird das Gehäuse 9 an einer Austrittstelle 15 abgedichtet. Der jeweilige Beistellantrieb 7 ist dem Stopfwerkzeug 6 zugeordnet, das dem dazugehörigen Vibrationsübertragungselement gegenüber liegt. In der Seitenansicht gemäß Fig. 1 überkreuzen sich somit die Wirkachsen der beiden Beistellantriebe 7. Durch eine versetzte Anordnung bzw. eine Freistellung wird verhindert, dass sich die Bestellantriebe 7 in ihrer Bewegung behindern oder dass störende Biegeelemente auftreten.

Die Stopfwerkzeuge 6 sind jeweils um eine Schwenkachse 16 am Werkzeugträger 5 drehbar gelagert. Das Gehäuse 9 samt Vibrationsübertragungselementen 13 ist über Verbindungselemente 31 lösbar auf dem Werkzeugträger 5 angeordnet.

Um ein Verstellen der Schwingungsamplitude 17 an den unteren Enden 18 der Stopfwerkzeuge 6 zu ermöglichen, ist das Gehäuse 9 in einer vertikalen Richtung 19 über einen Verstellantrieb 20 verschiebbar. Der Verstellantrieb 20 ist beispielhaft als Spindelantrieb ausgeführt. Die lösbaren Verbindungselement 31 sind dann an einem Führungsteil des Gehäuses 9 angeordnet oder selbst als vertikale Führungen ausgebildet.

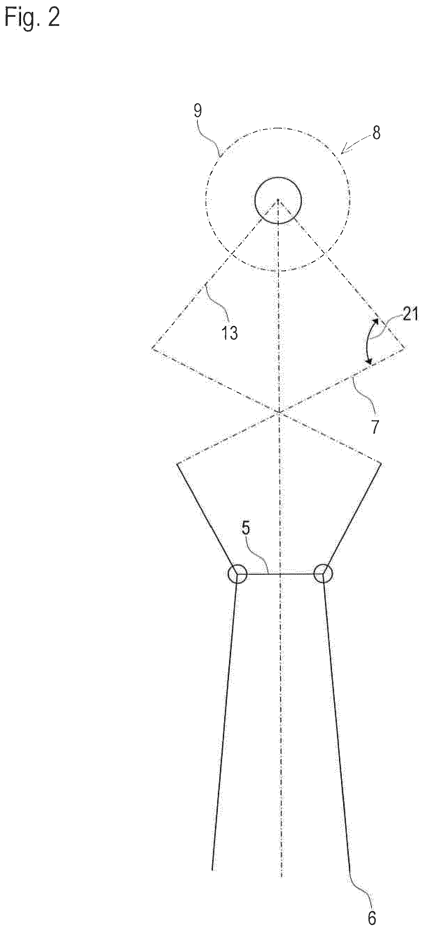

Die für ein Eindringen in eine Schotterbettung am besten geeignete Schwingungsamplitude 17 wird bei einem Winkel 21 von ca. 70 Grad zwischen der Längsachse des jeweiligen Vibrationsübertragungselements 13 und der Wirkachse des zugehörigen Beistellantriebes 7 erreicht. Fig. 2 zeigt die kinematische Anordnung in einer vereinfachten Strichdarstellung. In dieser Stellung beträgt die Schwingungsamplitude 17 in etwa 5 mm. Befindet sich das Stopfaggregat 1 in einer angehobenen Position, wird zur Energieersparnis und Lärmreduktion das Gehäuse 9 über den Verstellantrieb 20 angehoben und der Winkel 21 vergrößert. Bei 90 Grad wird die geringste Vibration auf den Beistellantrieb 7 übertragen und die Schwingungsamplitude 17 geht gegen Null.

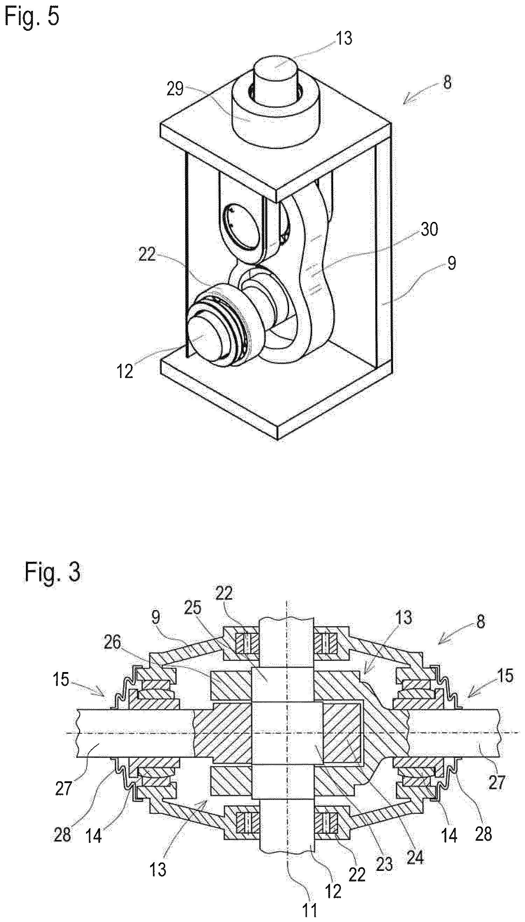

Fig. 3 zeigt ein vereinfachtes Schnittbild durch das Gehäuse 9 der Stopfeinheit 2 entlang der Schnittlinie A-A in Fig. 1. Die Exzenterwelle 12 ist im Gehäuse 9 mittels Lager 22 um die Exzenterachse 11 drehbar angeordnet. Die Vibrationsübertragungselemente 13 sind auf der Exzenterwelle 12 gelagert, z.B. mit nicht dargestellten Wälzlagern. Auf der Exzenterwelle 12 ist ein erster Exzenter 23 ausgebildet, mittels dem das erste Vibrationsübertragungselement 13 über ein Pleuelauge 24 in Vibration versetztbar ist. Daneben sind zwei Exzenter 25 angeordnet, mittels derer das zweite Vibrationsübertragungselementes 13 gegengleich zum ersten Vibrationsübertragungselement 13 über ein Pleuelauge 26 in Vibration versetzbar ist.

Jedes Vibrationsübertragungselement 13 weist eine Koppelstange 27 auf, die an einer Austrittsstelle 15 mittels der zugeordneten sphärischen Abdichtung 14 im Gehäuse 9 geführt ist. Um das Eindringen von Staub und Verunreinigungen zu verhindern, ist die Austrittsstelle 15 jeweils zusätzlich von einer Manschette 28 überdeckt.

Fig. 4 zeigt eine Stopfeinheit 2 mit einem unterhalb der Beistellantriebe 7 angeordneten Exzenterantrieb 8 samt Gehäuse 9. Auf dem absenkbaren Werkzeugträger 5 ist jeweils ein Stopfwerkzeug 6 auf einer Schwenkachse 16 drehbar gelagert. Aus dem Exzenterantriebe 8 ragt oben lediglich ein Vibrationsübertragungselement 13 heraus, auf dem beide Beistellantriebe 7 angelenkt sind. Das Vibrationsübertragungselement 13 ist in einer Führung 29 in vertikaler Richtung 19 verschiebbar auf dem Werkzeugträger 5 gelagert, um die Vibration vom Exzenterantrieb 8 auf die Beistellantriebe 7 zu übertragen.

Bei dieser Ausführungsform ist ein Pleuel 30 mit einem unteren Pleuelauge auf der Exzenterwelle 12 gelagert. Ein oberes Pleuelauge überträgt eine translatorische Vibrationsbewegung auf das Vibrationsübertragungselements 13. Dabei kann das Vibrationsübertragungselement 13 eine mittels eines Antriebs längsverstellbare Koppelstange 27 umfassen, um die kinematische Anordnung der Beistellzylinder 7 zu verändern und damit die Schwingungsamplitude 17 am unteren Ende 18 der Stopfwerkzeuge 6 einzustellen.

Alternativ dazu kann das Gehäuse 9 samt Exzenterantrieb 8 für die Verstellung der Schwingungsamplitude 17 mittels eines Verstellantriebs 20 höhenverstellbar auf dem Werkzeugträger 5 gelagert sein. Durch die Änderung der kinematischen Anordnung der Beistellantriebe 7 ändern sich jeweils einen Winkel 21 zwischen einer Wirkachse des Beistellantriebs 7 und der Längsachse des Vibrationsübertragungselements 13. Je spitzer dieser Winkel 21 eingestellt ist, desto größer ist die über die Beistellantriebe 7 auf die Stopfwerkzeuge 6 übertragene Vibrationsamplitude.

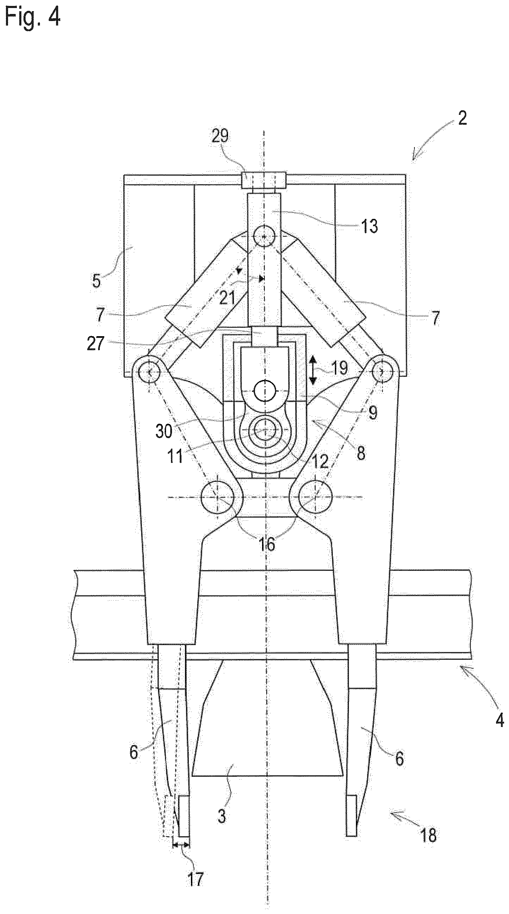

Fig. 5 zeigt eine Detailansicht des Exzenterantriebs 8 in der Variante gemäß Fig. 4. Im Gehäuse 9 ist die Exzenterwelle 12 mit Lagern 22 drehbar gelagert. An einer abgedichteten Gehäusedurchführung ist die Exzenterwelle 12 zur Kopplung an einen Rotationsantrieb nach außen geführt.

Auf einem Exzenterabschnitt der Exzenterwelle 12 ist das untere Pleuelauge des Pleuels 30 gelagert, wobei das Lager der Übersichtlichkeit halber nicht dargestellt ist. Die von der Exzenterwelle 12 erzeugte Vibration wird mittels des Pleuels 30 auf das Vibrationsübertragungselement 13 übertragen.

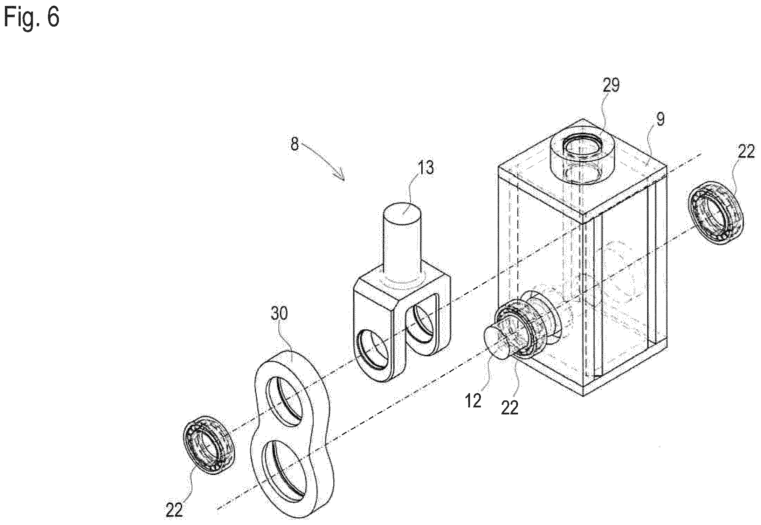

Fig. 6 zeigt eine Explosionszeichnung des Exzenterantriebes 8 samt Gehäuse 9, der Exzenterwelle 12, den Lagern 22, dem Pleuel 30 und einem unteren Abschnitt des Vibrationsübertragungselements 13.

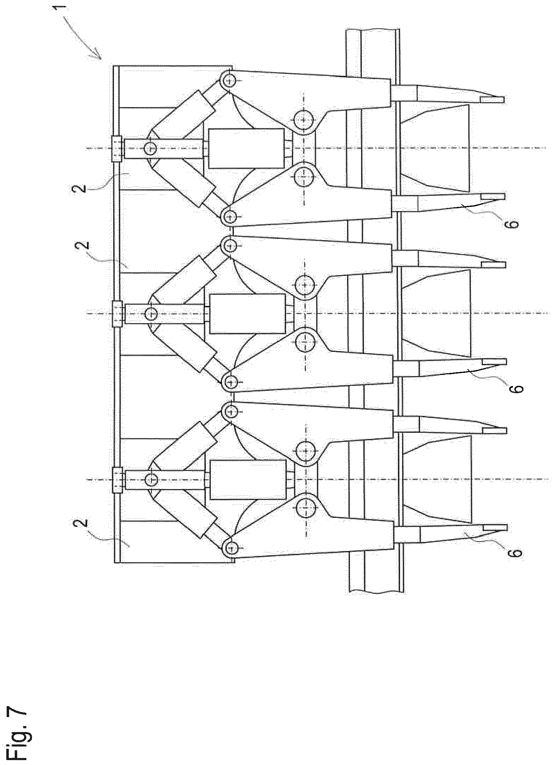

Die kompakte Bauweise der erfindungsgemäßen Stopfeinheit 2 erlaubt eine Kombination baugleicher Einheiten 2 in einem Stopfaggregat zur gleichzeitgien Unterstopfung mehrerer Schwellen 3. Eine beispielhafte Ausführung für drei Schwellen 3 zeigt Fig. 7. Hier sind Stopfeinheiten 2 zu einem 3-Schwellen-Aggregat zusammengesetzt. Die jeweils benachbarten Stopfwerkzeuge 6 der Stopfeinheiten 2 sind in einer Gleisquerrichtung vorzugsweise versetzt angeordnet.

## Patentansprüche

1. Stopfaggregat (1) zum Unterstopfen von Schwellen (3) eines Gleises (4), umfassend eine Stopfeinheit (2) mit gegenüberliegenden, auf einem Werkzeugträger (5) gelagerten Stopfwerkzeugen (6), welche jeweils mit einem Beistellantrieb (7) zur Erzeugung einer Beistellbewegung verbunden sind, wobei ein Exzenterantrieb (8) zur Erzeugung einer Vibrationsbewegung vorgesehen ist, wobei der Exzenterantrieb (8) in einem abgedichteten Gehäuse (9) mit einer Ölbadschmierung (10) angeordnet ist, **dadurch gekennzeichnet, dass** aus dem Gehäuse (9) zumindest ein Vibrationsübertragungselement (13) ragt, das mit einem Beistellantrieb (7) oder beiden Beistellantrieben (7) verbunden ist, wobei jedes Vibrationsübertragungselement (13) eine Koppelstange (27) aufweist.

2. Stopfaggregat (1) nach Anspruch 1, **dadurch gekennzeichnet, dass** das Gehäuse (9) mit dem zumindest einem Vibrationsübertragungselement (13) als mit lösbaren Verbindungselementen (31) montiertes Modul ausgebildet ist.

3. Stopfaggregat (1) nach Anspruch 1 oder 2, **dadurch gekennzeichnet, dass** das Stopfaggregat (1) mehrere baugleiche Stopfeinheiten (2) zum gleichzeitigen Unterstopfen mehrerer Schwellen (3) umfasst.

4. Stopfaggregat (1) nach einem der Ansprüche 1 bis 3, **dadurch gekennzeichnet, dass** ein erstes Vibrationsübertragungselement (13) mit dem einen Beistellantrieb (7) verbunden ist und dass ein zweites Vibrationsübertragungselement (13) mit dem anderen Beistellantrieb (7) verbunden ist.

5. Stopfaggregat (1) nach Anspruch 4, **dadurch gekennzeichnet, dass** das Gehäuse (9) oberhalb der Beistellantriebe (7) angeordnet ist.

6. Stopfaggregat (1) nach einem der Ansprüche 1 bis 3, **dadurch gekennzeichnet, dass** ein vertikal ausgerichtetes Vibrationsübertragungselement (13) mit beiden Beistellantrieben (7) verbunden ist.

7. Stopfaggregat (1) nach Anspruch 6, **dadurch gekennzeichnet, dass** das Gehäuse (9) unterhalb der Beistellantriebe (7) angeordnet ist.

8. Stopfaggregat (1) nach Anspruch 6 oder 7, **dadurch gekennzeichnet, dass** das Vibrationsübertragungselement (13) mittels eines Verstellantriebs (20) in seiner Länge verstellbar ausgeführt ist.

9. Stopfaggregat (1) nach einem der Ansprüche 1 bis 7, **dadurch gekennzeichnet, dass** das Gehäuse (9) gegenüber dem Werkzeugträger (5) mittels eines Verstellantriebs (20) vertikal verschiebbar ausgebildet ist.

10. Verfahren zum Unterstopfen von Schwellen (3) eines Gleises (4) mittels eines Stopfaggregats (1) nach Anspruch 8 oder 9, **dadurch gekennzeichnet, dass** eine Verbindungsstelle des jeweiligen Beistellantriebs (7) mit dem zugeordneten als Koppelstange (27) ausgebildeten Vibrationsübertragungselement (13) in vertikaler Richtung (19) verschoben wird, um eine Schwingungsamplitude (17) an einem unteren Ende (18) der Stopfwerkzeuge (6) zu variieren.

## Claims

1. A tamping assembly (1) for tamping sleepers (3) of a track (4), comprising a tamping unit (2) having oppositely positioned tamping tools (6) which are supported on a tool carrier (5) and are each connected to a squeezing drive (7) for producing a squeezing motion, wherein an eccentric drive (8) is provided for producing a vibratory motion, wherein the eccentric drive (8) is arranged in a sealed casing (9) with an oil-bath lubrication (10), **characterized in that,** and that at least one vibration transmission element (13) projects from the casing (9) and is connected to a squeezing drive (7) or both squeezing drives (7), wherein each vibration transmission element (13) has a coupling rod (27).

2. A tamping assembly (1) according to claim 1, **characterized in that** the casing (9) with the at least one vibration transmission element (13) is designed as a module mounted by means of detachable connecting elements (31).

3. A tamping assembly (1) according to claim 1 or 2, **characterized in that** the tamping assembly (1) comprises several structurally identical tamping units (2) for the simultaneous tamping of several sleepers (3).

4. A tamping assembly (1) according to one of claims 1 to 3, **characterized in that** a first vibration transmission element (13) is connected to the one squeezing drive (7), and a second vibration transmission element (13) is connected to the other squeezing drive (7).

5. A tamping assembly (1) according to claim 4, **characterized in that** the casing (9) is arranged above the squeezing drives (7).

6. A tamping assembly (1) according to one of claims 1 to 3, **characterized in that** a vertically oriented vibration transmission element (13) is connected to both squeezing drives (7).

7. A tamping assembly (1) according to claim 6, **characterized in that** the casing (9) is arranged underneath the squeezing drives (7).

8. A tamping assembly (1) according to claim 6 or 7, **characterized in that** the vibration transmission element (13) is designed to be adjustable as to its length by means of an adjustment drive (20).

9. A tamping assembly (1) according to one of claims 1 to 7, **characterized in that** the casing (9) is designed to be vertically displaceable relative to the tool carrier (5) by means of an adjustment drive (20).

10. A method of tamping sleepers (3) of a track (4) by means of a tamping assembly (1) according to claim 8 or 9, **characterized in that** a point of connection of the respective squeezing drive (7) to the associated vibration transmission element (13) designed as a coupling rod (27), is shifted in vertical direction (19) in order to vary a vibration amplitude (17) at a lower end (18) of the tamping tools (6).

## Revendications

1. Module de bourrage (1) pour le bourrage inférieur de traverses (3) d'une voie ferrée (4), comprenant une unité de bourrage (2) avec des outils de bourrage opposés (6) logés sur un porte-outil (5), qui sont chacun connectés à un entraînement d'adjonction (7) pour la génération d'un mouvement d'adjonction, dans lequel un entraînement excentrique (8) est prévu pour la génération d'un mouvement vibratoire, dans lequel l'entraînement excentrique (8) est disposé dans un logement étanchéifié (9) avec une lubrification à bain d'huile (10), **caractérisé en ce qu'**au moins un élément de transmission vibratoire (13) dépasse du logement (9), lequel est connecté à un entraînement d'adjonction (7) ou aux deux entraînements d'adjonction (7), dans lequel chaque élément de transmission vibratoire (13) présente une bielle (27).

2. Module de bourrage (1) selon la revendication 1, **caractérisé en ce que** le logement (9) est réalisé avec l'au moins un élément de transmission vibratoire (13) en tant que module monté avec des éléments de connexion amovibles (31).

3. Module de bourrage (1) selon la revendication 1 ou 2, **caractérisé en ce que** le module de bourrage (1) comprend plusieurs unités de bourrage de même construction (2) pour le bourrage inférieur simultané de plusieurs traverses (3).

4. Module de bourrage (1) selon une des revendications 1 à 3, **caractérisé en ce qu'**un premier élément de transmission vibratoire (13) est connecté à un des entraînements d'adjonction (7) et qu'un second élément de transmission vibratoire (13) est connecté à l'autre entraînement d'adjonction (7).

5. Module de bourrage (1) selon la revendication 4, **caractérisé en ce que** le logement (9) est disposé au-dessus des entraînements d'adjonction (7).

6. Module de bourrage (1) selon une des revendications 1 à 3, **caractérisé en ce qu'**un élément de transmission vibratoire orienté verticalement (13) est connecté aux deux entraînements d'adjonction (7).

7. Module de bourrage (1) selon la revendication 6, **caractérisé en ce que** le logement (9) est disposé en dessous des entraînements d'adjonction (7).

8. Module de bourrage (1) selon la revendication 6 ou 7, **caractérisé en ce que** l'élément de transmission vibratoire (13) est réalisé de manière à pouvoir être déplacé dans sa longueur au moyen d'un entraînement de déplacement (20).

9. Module de bourrage (1) selon une des revendications 1 à 7, **caractérisé en ce que** le logement (9) est réalisé de manière coulissante verticalement par rapport au porte-outil (5) au moyen d'un entraînement de déplacement (20).

10. Procédé de bourrage inférieur de traverses (3) d'une voie ferrée (4) au moyen d'un module de bourrage (1) selon la revendication 8 ou 9, **caractérisé en ce qu'**un point de connexion de l'entraînement d'adjonction respectif (7) à l'élément de transmission vibratoire associé (13) réalisé en tant que bielle (27) est coulissé en direction verticale (19) pour faire varier une amplitude d'oscillation (17) à une extrémité inférieure (18) des outils de bourrage (6).
